# EUROPÄISCHE PATENTSCHRIFT

(11) **EP 0 646 401 B1**
(45) Veröffentlichungstag und Bekanntmachung des Hinweises auf die Patenterteilung: **23.07.1997**
(21) Anmeldenummer: 94113305.0
(22) Anmeldetag: 25.08.1994
(51) Int. Cl.: B01D 46/06, B01D 29/11

(54) **Filtereinsatz**
Filter insert
Elément filtrant

(30) Priorität: 01.09.1993 DE 4329367
(43) Veröffentlichungstag der Anmeldung: 05.04.1995
(73) Patentinhaber: JUNKER-FILTER GmbH, D-74889 Sinsheim (DE)
(72) Erfinder: Junker, Jürgen, D-74889 Sinsheim (DE)
(74) Vertreter: Ostertag, Reinhard

(56) Entgegenhaltungen:
- EP-A- 0 515 045
- DE-A- 2 447 886
- FR-A- 2 318 669
- GB-A- 2 094 655

## Beschreibung

Die Erfindung betrifft einen Filtereinsatz gemäß dem Oberbegriff des Anspruches 1.

Derartige Filtereinsätze (DE-A-2447886) haben als aktive Filterteile flexibles Filtermaterial, welches von einem Stützkörper aufgespannt gehalten wird. Überwiegend werden derartige Filtereinsätze in vertikaler Ausrichtung in ein Filtergehäuse eingebaut, damit ein sich auf der Außenseite des Filtertuches ansammelnder Filterkuchen leicht abfällt, wenn das Innere des Filtereinsatzes mit Druck beaufschlagt wird.

Ferner sind Filtereinsätze bekannt, bei denen das eigentliche Filterelement zickzackförmig gefaltet ist. Derartige Filterpatronen werden ebenfalls überwiegend in vertikaler Ausrichtung verwendet, da sich sonst über einen großen Teil des Umfanges ein auf der Außenseite aufgebauter Filterkuchen beim Rückspülen nicht mehr oder nur begrenzt ablöst.

Durch die vorliegende Erfindung soll daher ein Filtereinsatz gemäß dem Oberbegriff des Anspruches 1 geschaffen werden, bei dem einerseits keine Stützkonstruktion vorgesehen ist, die bei Relativbewegungen zwischen Filterelement und Stützkonstruktion zu Beschädigungen des Filterelementes führen könnte, andererseits auch bei horizontalem Einbau ein guter Abwurf eines Filterkuchens gewährleistet ist.

Diese Aufgabe ist erfindungsgemäß gelöst durch einen Filtereinsatz gemäß Anspruch 1.

Bei dem erfindungsgemäßen Filtereinsatz bilden die zickzack-gefalteten oder ebenen Filterwände zusammen mit den eigensteifen Wandteilen eine robuste und tragfähige Konstruktion. Von den gefalteten Filterwänden kann der Filterkuchen gut nach unten abfallen. Auf den eigensteifen Wandteilen setzen sich nur in geringfügigem Ausmaß Feststoffe ab, und dies ist im Hinblick auf die Filtereigenschaften und den Filterkuchenabwurf nicht nachteilig.

Die Erfindung erlaubt die Verwendung hoher zickzack-gefalteter Filterwände unter Aufrechterhaltung einer hohen mechanischen Stabilität, sowohl bei Unterdruckbeaufschlagung des Filtereinsatzes beim Filtrieren als auch bei Überdruckbeaufschlagung des Filtereinsatzes beim Rückspülen zur Ablösung des Filterkuchens.

Vorteilhafte Weiterbildungen der Erfindung sind in Unteransprüchen angegeben.

Die Weiterbildung der Erfindung gemäß Anspruch 2 ist im Hinblick auf niedrige Herstellungskosten aber auch im Hinblick auf ein leichtes Abrutschen von Feststoffpartikeln von Vorteil.

Mit der Weiterbildung der Erfindung gemäß Anspruch 3 wird auf einfache Weise einen dichte Verbindung zwischen den Filterwänden und den Wandteilen erhalten.

Die Weiterbildung der Erfindung gemäß Anspruch 4 gestattet die Herstellung von Filtereinsätzen sehr unterschiedlicher Abmessungen unter Verwendung von endlosem Standardmaterial zur Herstellung der oberen sowie unteren Wandteile und gegebenenfalls mittlerer Innenteile.

Anspruch 5 betrifft eine Abwandlung vom Anspruch 1, bei welcher die Filterwände von der Außenseite abgestützt werden.

Ein Filtereinsatz gemäß Anspruch 6 zeichnet sich durch günstige Strömungsverhältnisse im Kopfabschnitt aus.

Mit der Weiterbildung der Erfindung gemäß Anspruch 7 ist ein besonders zuverlässiges Haltern des freien Endes des Filtereinsatzes auch bei großer Länge desselben gewährleistet.

Die Weiterbildung der Erfindung gemäß Anspruch 8 ist im Hinblick auf einfache Montage des Filtereinsatzes und gute Abdichtwirkung in einem Filtergehäuse von Vorteil.

Nachstehend wird die Erfindung anhand von Ausführungsbeispielen unter Bezugnahme auf die Zeichnung näher erläutert. In dieser zeigen:
- Figur 1:: einen vertikalen Schnitt durch einen Filtereinsatz für einen Staubfilter zusammen mit einem Abschnitt einer ihn halternden Lochplatte;
- Figur 2:: einen horizontalen Schnitt durch den in Figur 1 gezeigten Filtereinsatz;

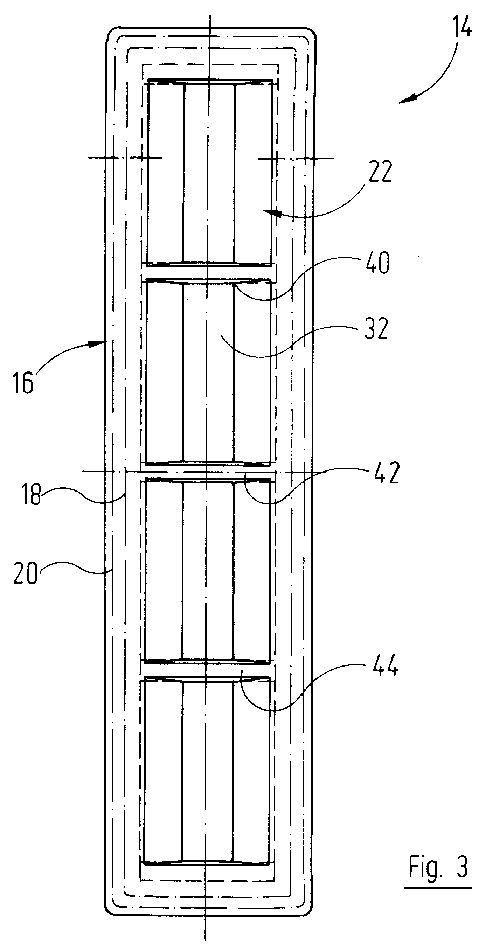

- Figur 3:: eine Aufsicht auf die in Figur 1 links gelegene Stirnfläche des Filtereinsatzes nach den Figuren 1 und 2;
- Figur 4-6:: jeweils eine Aufsicht auf die Verbindungsstelle zwischen einer zickzack-gefalteten Filterwand und einem steifen Wandteil eines abgewandelten Filtereinsatzes;
- Figur 7-10:: jeweils eine Aufsicht auf die Verbindungsstelle zwischen einer zickzack-falteten Filterwand und einem steifen Innenteil eines abgewandelten Filtereinsatzes;
- Figur 11:: eine seitliche Ansicht eines weiter abgewandelten für vertikalen Einbau ausgelegten Filtereinsatzes, ähnlich zu Figur 1;
- Figur 12:: eine Aufsicht auf die in Figur oben liegende Stirnfläche des Filtereinsatzes nach Figur 10; und
- Figur 13:: eine seitliche Ansicht des Filtereinsatzes nach den Figuren 11 und 12.

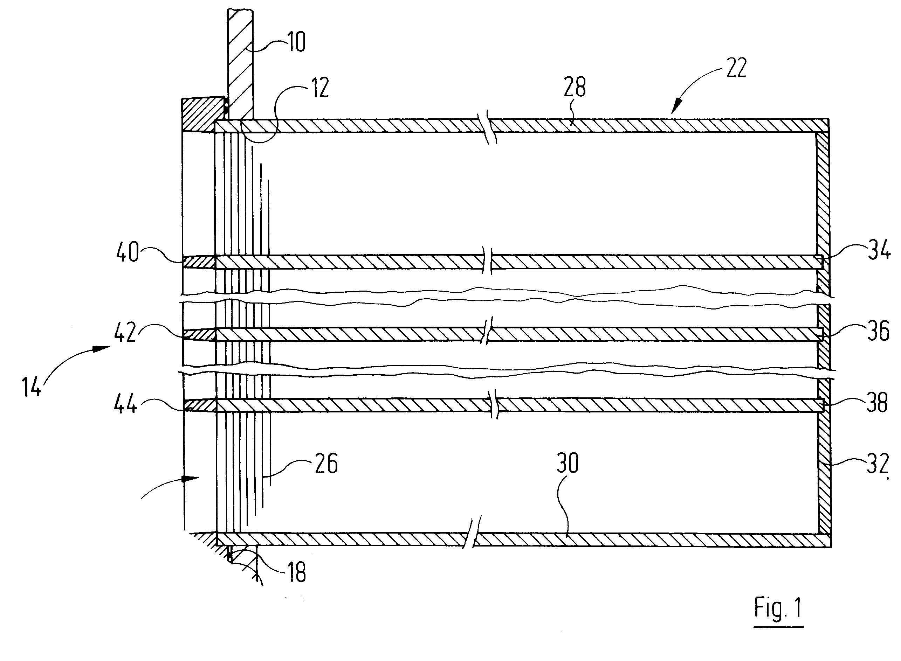

In Figur 1 ist mit 10 eine Lochplatte bezeichnet, die vertikal ausgerichtet in einem in der Zeichnung nicht wiedergegebenen Filtergehäuse angeordnet ist und dort die Reinseite (links gelegen) von der Staubseite (rechts gelegen) trennt.

Die Lochplatte 10 ist im wesentlichen rechteckig und hat eine große Anzahl in rechteckigem Raster angeordneter rechteckiger Öffnungen 12, die jeweils einen insgesamt mit 14 bezeichneten Filtereinsatz aufnehmen können.

Jeder der Filtereinsätze 14 hat einen Kopfabschnitt 16, der ein PUR-Spritzteil ist und auf seiner in Figur 1 rechts gelegenen Stirnfläche in der Nachbarschaft des Randes zwei umlaufende Dichtrippen 18, 20 trägt.

Der Kopfabschnitt 16 ist an einen insgesamt mit 22 bezeichneten Filterabschnitt angespritzt. Letzterer hat zwei seitliche, vertikale, zickzack-gefaltete Filterwände 24, 26, wobei die Faltlinien ebenfalls vertikal verlaufen.

Die Filterwände 24, 26 können ein Gewebe, Vlies oder Nadelfilz aus Fasern der nachstehenden Werkstoffe sein: Polyäthylen, Polypropylen, Polyester, Polyamid, Polyacrylnitril, Aramide, Polyphenylensulfide, Polyimide, Polyetherketone, Polytetrafluoräthylen, Glasfasern, Edelstahlfasern, Keramikfasern. Diese Fasern sind ggf. durch geeignete Bindemittel zu einer porigen filterwirksamen Struktur verbunden. Durch deren Eigensteife und die Zickzackfaltung erhalten die Filterwände 24, 26 ihre mechanische Festigkeit.

Die oben liegenden bzw. unten liegenden Enden der Filterwände 24, 26 sind in die seitlichen Endabschnitte eines oberen Wandteiles 28 bzw. eines unteren Wandteiles 30 eingespritzt. Die in der Zeichnung rechts liegenden vertikalen Endabschnitte der Filterwände 24, 26 sind in ein vertikales hinteres Wandteil 32 eingespritzt, und die in der Zeichnung links gelegenen vertikalen Ränder der Filterwände 24, 26 sind beim Anspritzen des Kopfabschnittes 16 in letzteren eingebettet worden.

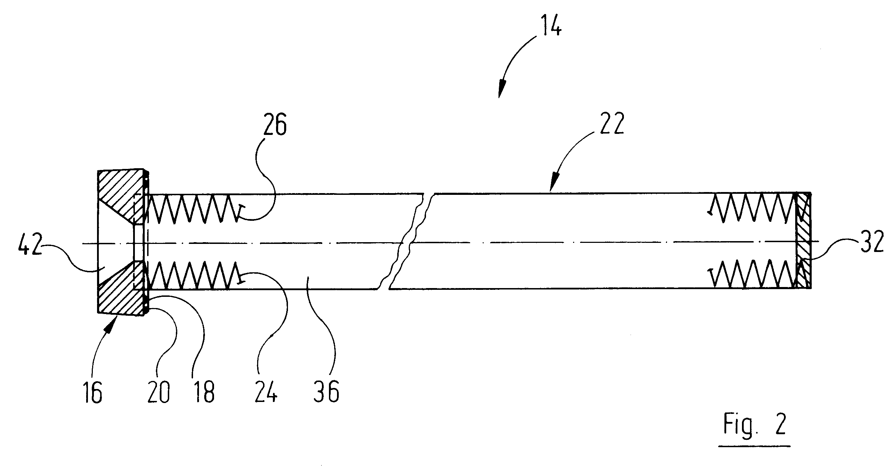

Zwischen dem oberen Wandteil 28 und dem unteren Wandteil 30 verlaufen hierzu parallel und unter im wesentlichen gleichem Abstand voneinander mittlere horizontale Innenteile 34, 36, 38, so daß eine Kammerbauweise mit definierten Strömungsverhältnissen entsteht. Letztere sind mit ihren Rändern an die Filterwände 24, 26 angespritzt. In Fortsetzung der Innenteile 34, 36, 38 sind im Kopfabschnitt 16 Stege 40, 42, 44 vorgesehen. Letztere haben leicht schräg angestellte Wandflächen, während die seitlichen Begrenzungsflächen der Öffnungen des Kopfabschnittes 16 unter einem Winkel von jeweils ca. 45° zur Mittelebene des Filtereinsatzes 14 angestellt sind, wie aus Figur 2 ersichtlich.

Als Material für den Kopfabschnitt 16, die Wandteile 28-32 und die Innenteile 34-38 kommt nicht nur PUR in Frage, sondern jeweils nach den Temperaturen, bei denen der Filtereinsatz eingesetzt werden soll, auch Kunststoff textiler Machart oder Metall. Auch können die Filterwände 24, 26 nicht nur aus textilen Kunststoffen sondern auch aus Metallfiltermedien bestehen, wobei die genannten Komponenten auch im Verbund vorliegen können und ein Verkleben für hohe Temperaturen auch unter Verwendung keramischer Klebsysteme erfolgen kann.

Der oben beschriebene Filtereinsatz hat eine hohe mechanische Stabilität und zeichnet sich durch ein gutes Abwerfen von auf der Außenseite der Filterwände 24, 26 aufgebauten Filterkuchen bei Rückspülung aus. Typische Einsatzbedingungen in einem Staubfilter lassen sich durch die nachstehenden Parameter charakterisieren:
- Temperatur: : 0 - 250°C
- Staubbeladung der Luft: : 0,5 - 250 g/m³
- Spezifische Filterflächenbelastung: : 40 - 240 m³/m²h
- Unterdruckbelastbarkeit: : bis 2 500 Pa
- Druckbelastbarkeit: : 1,5 - 6 bar.

Da der oben beschriebene Filtereinsatz rechteckigen transversalen Querschnitt aufweist, lassen sich mit solchen Filtereinsätzen rechteckige Filtergehäuse sehr gut füllen, so daß man gegenüber herkömmlichen Filterschläuchen oder Filtertaschen eine erheblich höhere wirksame Nettofilterfläche hat.

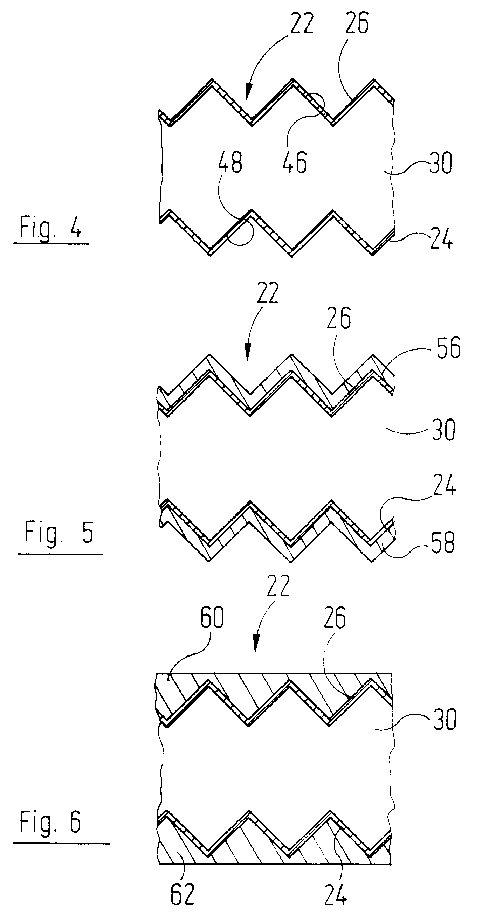

Ein nach dem in Figur 4 gezeigten Prinzip aufgebauter Filtereinsatz läßt sich einfach in unterschiedlichen Größen ohne Bereitstellung unterschiedlicher Spritzformen herstellen. Ein endloses Material zur Herstellung der Wandteile 28, 30 und wahlweise 34-38 hat seitliche Ränder 46, 48, die gemäß der Faltung der Filterwände 24, 26 verlaufen. Dieses Material kann als Standard-Endlosmaterial hergestellt werden. An den seitlichen Rändern 46, 48 sind die unteresten Abschnitte der Filterwände 24, 26 festgeklebt oder festgeschweißt.

Die so erhaltene Struktur aus den Filterwänden 24, 26 und den horizontalen Wandteilen braucht dann nur noch hinten mit dem Wandteil 32 versehen zu werden, was ebenfalls durch Verkleben erfolgen kann und anschließend wird ein Kopfabschnitt 16 ebenfalls durch Verkleben befestigt.

Bei dem abgewandelten Ausführungsbeispiel nach Figur 5 ist das Wandteil 30 an die unteren Enden der Filterwände 24, 26 angespritzt oder angegossen und hat seitliche äußere über die unteren Wandteilenden hochgezogene und mit diesen verspritzte oder vergossene Ränder 56, 58.

Beim Ausführungsbeispiel nach Figur 6 ist das Wandteil 30 in Aufsicht gesehen rechteckig und hat hochgezogene im wesentlichen eine Aneinanderreihung massiver Dreiecke darstellende Ränder 60, 62, welche mit den unteren Enden der Wandteile 28, 30 verspritzt oder vergossen sind.

Es versteht sich, daß die oberen Wandteile 28 symetrisch zu den unteren Wandteilen 30 ausgebildet sind.

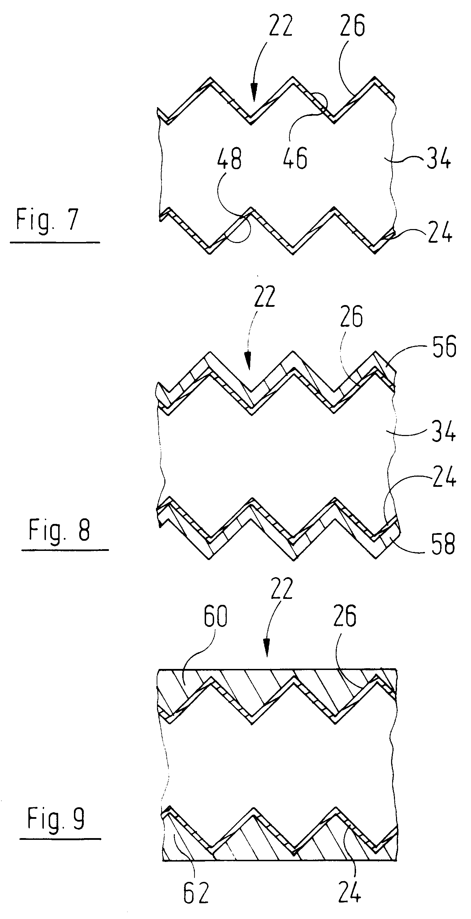

Es versteht sich ferner, daß man die in verschiedenen Zwischenstellungen zwischen den Wandteilen 28 und 30 vorgesehenen Innenteile 34, 36, 38 analog ausbilden kann wie die in den Figuren 4-6 gezeigten Wandteile 30, wobei die Ränder 56, 58 bzw. 60, 62, falls vorgesehen, symmetrisch zu beiden Seiten der Mittelflächen der Innenteile 34-38 vorgesehen sind. Siehe hierzu die Figuren 7 und 8 als Entsprechungen der Figuren 4 und 5.

In Abwandlung hiervon kann man bei den Innenteilen 34-38 gemäß der Figur 9 auch die den Innenraum des Filtereinsatzes unterteilenden Wände weglassen, falls gewünscht, und eine Versteifung der Filterwände 24, 26 an zwischen den Wandteilen 28, 30 liegenden Stellen nur durch auf die Außenseite der Filterwände aufgespritzte oder angegossene Leisten vornehmen, deren Geometrie der der Ränder 56, 58 bzw. 60, 62 entspricht.

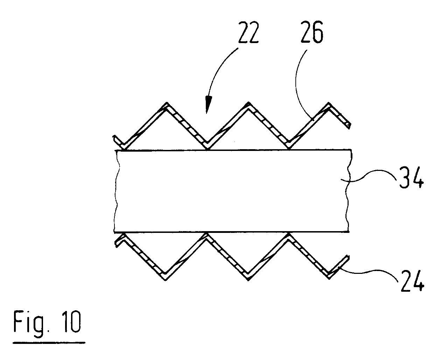

Ferner kann man gemäß Figur 10 die Innenteile 34-38 auch so ausbilden, daß sie nur eine Abstützung gegenüber Druckbelastungen gewährleisten, jedoch das strömungsmäßige Zusammenhängen des gesamten Innenraumes des Filtereinsatzes weiterhin gewährleistet ist.

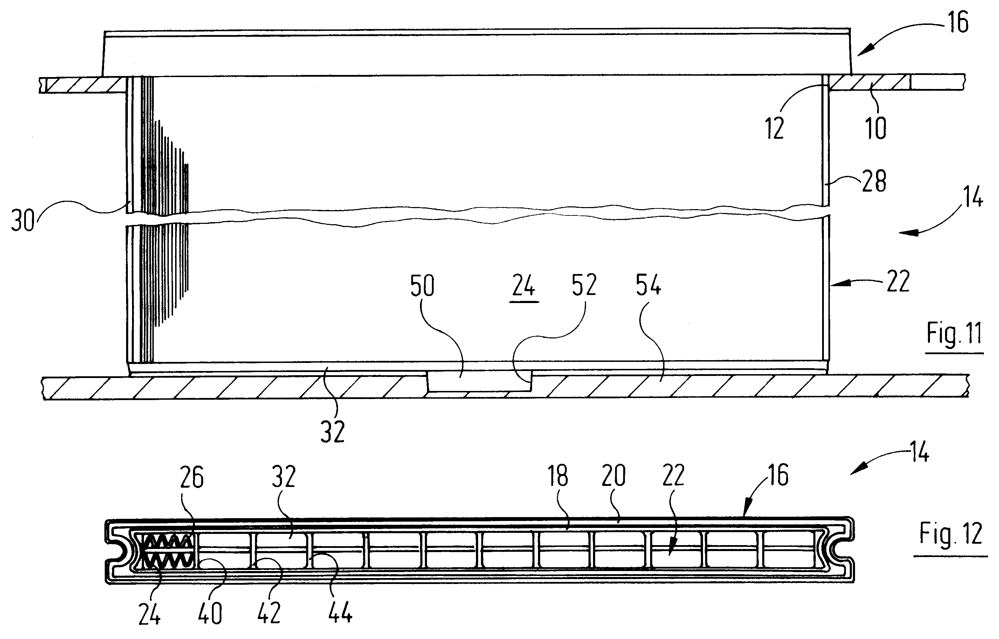

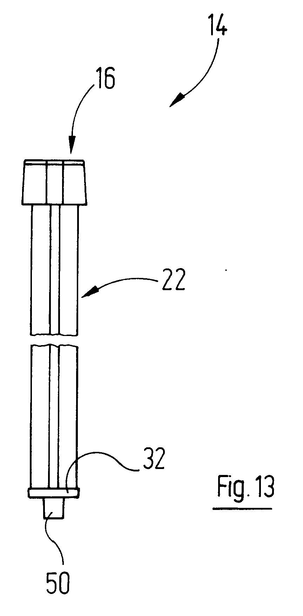

Bei dem in den Figuren 11-13 gezeigten Filtereinsatz sind Komponenten des Einsatzes, die funktionell schon oben beschriebenen Komponenten entsprechen, wieder mit denselben Bezugszeichen versehen. Diese Komponenten brauchen nachstehend auch nicht nochmals im einzelnen beschrieben zu werden.

Der in den Figuren 11-13 gezeigte Filtereinsatz ist für den vertikalen Einbau sowohl von der Reingas- als auch der Rohgasseite her bestimmt, und um bei großer vertikaler Abmessung der Filterwände 24, 26 das untere Ende des Filtereinsatzes 14 zwangsweise zu positionieren, ist an das Wandteil 32 ein Positionierzapfen 50 angeformt. Dieser arbeitet mit einer Postioniervertiefung 52 zusammen, die auf einer unteren Behälterwand 54 des Filtergehäuses vorgesehen ist.

Ein möglicher weiterer Unterschied des Filtereinsatzes nach den Figuren 11-13 zum Filtereinsatz nach den Figuren 1 und 2 besteht darin, daß dieser Filtereinsatz zum Anbau an die Lochplatte von der Staubseite her bestimmt ist, wozu die Dichtrippen 18, 20 auf der lochplattenseitigen Stirnfläche des Kopfabschnittes 16 vorgesehen sind.

## Patentansprüche

1. Filtereinsatz mit einem an einer Lochplatte (10) eines Filtergehäuses befestigbaren Kopfabschnitt (16) und einem hieran dicht festgelegten taschenförmigen Filterabschnitt (22), welcher aufweist: zwei seitliche Filterwände (24, 26), ein oberes eigensteifes Wandteil (28), ein unteres eigensteifes Wandteil (30) und ein hinteres eigensteifes Wandteil (32), wobei das obere Wandteil (28) und das untere Wandteil (30) dicht und mechanisch belastbar mit dem hinteren, vom Kopfabschnitt (16) abliegenden Wandteil (32) und mit dem Kopfabschnitt (16) verbunden sind, so daß ein Rahmen gebildet wird, wobei die beiden Filterwände (24, 26) mit allen drei Wandteilen (28, 30, 32) und mit dem Kopfabschnitt (16) dicht verbunden sind und wobei der Kopfabschnitt (16) mit mindestens einer Öffnung versehen ist, über welche gereinigtes Gas abströmen kann, dadurch gekennzeichnet, daß die Filterwände (24, 26) zick-zack gefaltet sind und daß zwischen dem oberen Wandteil (28) und dem unteren Wandteil (30) mindestens ein zu diesen Wandteilen paralleles mittleres Innenteil (34, 38) angeordnet ist, welches transversal zu den Falten verläuft und die Filterwände (24, 26) abstützt.

2. Filtereinsatz nach Anspruch 1, dadurch gekennezeichnet, daß die eigensteifen Wandteile (28-32) Kunststoffspritzteile oder aus Kunststoff gegossene Teile sind.

3. Filtereinsatz nach Anspruch 1 oder 2, dadurch gekennzeichnet, daß die Wandteile (28-32) und Innenteile (34-38) an die Filterwände (24, 26) angespritzt oder angegossen sind.

4. Filtereinsatz nach einem der Ansprüche 1 bis 3, dadurch gekennzeichnet, daß die Wandteile (28-32) gemäß der Zickzack-Faltung der Filterwände zahnförmig gestaltete Randflächen haben, und die Filterwände (24, 26) auf die Randflächen (46, 48) der Wandteile (28-38) aufgeklebt, aufgeschweißt oder aufgegossen sind.

5. Filtereinsatz mit einem an einer Lochplatte (10) eines Filtergehäuses befestigbaren Kopfabschnitt (16) und einem hieran dicht festgelegten taschenförmigen Filterabschnitt (22), welcher aufweist: zwei seitliche Filterwände (24, 26), ein oberes eigensteifes Wandteil (28), ein unteres eigensteifes Wandteil (30) und ein hinteres eigensteifes Wandteil (32), wobei das obere Wandteil (28) und das untere Wandteil (30) dicht und mechanisch belastbar mit dem hinteren, vom Kopfabschnitt (16) abliegenden Wandteil (32) und mit dem Kopfabschnitt (16) verbunden sind, so daß ein Rahmen gebildet wird, wobei die beiden Filterwände (24, 26) mit allen drei Wandteilen (28, 30, 32) und mit dem Kopfabschnitt (16) dicht verbunden sind und wobei der Kopfabschnitt (16) mit mindestens einer Öffnung versehen ist, über welche gereinigtes Gas abströmen kann, dadurch gekennzeichnet, daß die Filterwände (24, 26) zick-zack gefaltet sind und daß zur Abstützung der Filterwände zwischen dem oberen Wandteil (28) und dem unteren Wandteil (30) mindestens eine zu diesen Wandteilen parallele Leiste vorgesehen ist, welche auf die Außenseite der Filterwände transversal zu den Falten aufgespritzt oder angegossen ist und deren Geometrie der der Ränder (56, 58, 60, 62) des oberen bzw. unteren Wandteils entspricht.

6. Filtereinsatz nach einem der Ansprüche 1-5, dadurch gekennzeichnet, daß die zum Innenraum des Filterabschnittes (18) führende Öffnung des Kopfabschnittes (16) sich mit zunehmenden Abstand von Filterabschnitt (22) erweitert, vorzugsweise im wesentlichen ebene divergierende seitliche Wandflächen hat.

7. Filtereinsatz nach einem der Ansprüche 1-6, dadurch gekennzeichnet, daß das vom Kopfabschnitt (16) abliegende Wandteil (32) ein Formschlußelement (50) trägt, welches zusammen mit einem vom Filtergehäuse getragenen Gegen-Formschlußelement (52) das von der Lochplatte (10) abliegende Ende des Filtereinsatzes (14) abstützt.

8. Filtereinsatz nach einem der Ansprüche 1-7, dadurch gekennzeichnet, daß der Kopfabschnitt (16) auf einer seiner Stirnflächen mit umlaufenden Dichtmitteln (18, 20) versehen ist.

## Claims

1. Filter insert with a top section (16) capable of being attached to a perforated plate (10) of a filter casing and a pocket-shaped filter section (22) fixed tightly against said top section, said filter section (22) comprising: two lateral filter walls (24, 26), an upper inherently rigid wall component (28), a lower inherently rigid wall component (30) and a rear inherently rigid wall component (32), whereby the upper wall component (28) and the lower wall component (30) are connected to the lower wall component (32) remote from the top section (16) and to the top section (16) in tight and mechanically loadable manner so that a frame is formed, whereby the two filter walls (24, 26) are tightly connected to all three wall components (28, 30, 32) and to the top section (16) and whereby the top section (16) is provided with at least one aperture via which purified gas can flow away, characterised in that the filter walls (24, 26) are folded in zigzag manner and in that at least one central internal component (34, 38) is arranged between the upper wall component (28) and the lower wall component (30) parallel to these wall components, said central internal component extending transverse to the folds and supporting the filter walls (24, 26).

2. Filter insert according to Claim 1, characterised in that the inherently rigid wall components (28-32) are synthetic injection-moulded components or components cast from synthetic material.

3. Filter insert according to Claim 1 or 2, characterised in that the wall components (28-32) and internal components (34-38) are injection-moulded or cast onto the filter walls (24, 26).

4. Filter insert according to one of Claims 1 to 3, characterised in that the wall components (28-32) have tooth-shaped edge faces according to the zigzag fold of the filter walls and the filter walls (24, 26) are bonded, welded or cast onto the edge faces (46, 48) of the wall components (28-38).

5. Filter insert with a top section (16) capable of being attached to a perforated plate (10) of a filter casing and a pocket-shaped filter section (22) fixed tightly against said top section, said filter section (22) comprising: two lateral filter walls (24, 26), an upper inherently rigid wall component (28), a lower inherently rigid wall component (30) and a rear inherently rigid wall component (32), whereby the upper wall component (28) and the lower wall component (30) are connected to the lower wall component (32) remote from the top section (16) and to the top section (16) in tight and mechanically loadable manner so that a frame is formed, whereby the two filter walls (24, 26) are tightly connected to all three wall components (28, 30, 32) and to the top section (16) and whereby the top section (16) is provided with at least one aperture via which purified gas can flow away, characterised in that the filter walls (24, 26) are folded in zigzag manner and in that, with a view to supporting the filter walls, at least one strip is provided between the upper wall component (28) and the lower wall component (30) parallel to these wall components, said strip being injection-moulded or cast onto the outside of the filter walls transverse to the folds and having a geometry corresponding to that of the edges (56, 58, 60, 62) of the upper or lower wall component.

6. Filter insert according to one of Claims 1-5, characterised in that the aperture in the top section (16) leading to the interior of the filter section (18) grows wider with increasing distance from the filter section (22) and preferably has substantially plane divergent lateral wall surfaces.

7. Filter insert according to one of Claims 1-6, characterised in that the wall component (32) remote from the top section (16) bears an engaging element (50) which together with a counter-engaging element (52) borne by the filter casing supports the end of the filter insert (14) remote from the perforated plate (10).

8. Filter insert according to one of Claims 1-7, characterised in that the top section (16) is provided on one of its end faces with circumferential sealing means (18, 20).

## Revendications

1. Cartouche filtrante comprenant une section de tête (16) pouvant être fixée à une plaque perforée (10) d'une enveloppe de filtre et une section filtrante (22) en forme de poche attachée de façon étanche à la section de tête et possédant: deux parois filtrantes latérales (24, 26), une partie de paroi supérieure (28) à rigidité inhérente, une partie de paroi inférieure (30) à rigidité inhérente et une partie de paroi arrière (32) à rigidité inhérente, cartouche dans laquelle la partie de paroi supérieure (28) et la partie de paroi inférieure (30) sont reliées de façon étanche et de manière à pouvoir être chargées mécaniquement à la partie de paroi arrière (32), éloignée de la section de tête (16), ainsi qu'à cette section de tête (16), de sorte qu'un encadrement soit formé, dans laquelle les deux parois filtrantes (24, 26) sont reliées de façon étanche aux trois parties de paroi (28, 30, 32) et à la section de tête (16) et dans laquelle la section de tête (16) est pourvue d'au moins une ouverture à travers de laquelle peut sortir du gaz épuré, caractérisée en ce que les parois filtrantes (24, 26) sont pliées en zigzag et qu'au moins une partie intérieure centrale (34, 38) est disposée entre la partie de paroi supérieure (28) et la paroi de paroi inférieure (30), parallèlement à celles-ci, partie intérieure qui s'étend transversalement aux plis et soutient les parois filtrantes (24, 26).

2. Cartouche filtrante selon la revendication 1, caractérisée en ce que les parties de paroi (28-32) à rigidité inhérente sont des pièces moulées par injection ou coulées en matière plastique.

3. Cartouche filtrante selon la revendication 1 ou 2, caractérisée en ce que les parties de paroi (28-32) et les parties intérieures (34-38) sont fixées aux parois filtrantes (24-26) par moulage par injection ou coulée.

4. Cartouche filtrante selon une des revendications 1 à 3, caractérisée en ce que les parties de paroi (28-32) possèdent des surfaces de bordure réalisées à la façon de clôtures dont la configuration correspond au pliage en zigzag des parois filtrantes, et les parois filtrantes (24, 26) sont fixées sur les surfaces de bordure (46, 48) des parties de paroi (28-38) par collage, soudage ou coulée.

5. Cartouche filtrante comprenant une section de tête (16) pouvant être fixée à une plaque perforée (10) d'une enveloppe de filtre et une section filtrante (22) en forme de poche attachée de façon étanche à la section de tête et possédant: deux parois filtrantes latérales (24, 26), une partie de paroi supérieure (28) à rigidité inhérente, une partie de paroi inférieure (30) à rigidité inhérente et une partie de paroi arrière (32) à rigidité inhérente, cartouche dans laquelle la partie de paroi supérieure (28) et la partie de paroi inférieure (30) sont reliées de façon étanche et de manière à pouvoir être chargées mécaniquement à la partie de paroi arrière (32), éloignée de la section de tête (16), ainsi qu'à cette section de tête (16), de sorte qu'un encadrement soit formé, dans laquelle les deux parois filtrantes (24, 26) sont reliées de façon étanche aux trois parties de paroi (28, 30, 32) et à la section de tête (16) et dans laquelle la section de tête (16) est pourvue d'au moins une ouverture à travers de laquelle peut sortir du gaz épuré, caractérisée en ce que les parois filtrantes (24, 26) sont pliées en zigzag et que, pour supporter les parois filtrantes, au moins une barrette est prévue entre la partie de paroi supérieure (28) et la partie de paroi inférieure (30), parallèlement à celles-ci, barrette qui est formée par moulage par injection ou coulée sur le côté extérieur des parois filtrantes, transversalement aux plis, et dont la géometrie correspond à celle des rebords (56, 58; 60, 62) des parties de paroi supérieure et inférieure respectivement.

6. Cartouche filtrante selon une des revendications 1-5, caractérisée en ce que l'ouverture de la section de tête (16) menant à l'espace intérieur de la section filtrante (22) s'élargit à mesure que la distance par rapport à la section filtrante (22) augmente, et possède de préférence des faces de parois latérales divergentes essentiellement planes.

7. Cartouche filtrante selon une des revendications 1-6, caractérisée en ce que la partie de paroi arrière (32) éloignée de la section de tête (16) porte un élément (50) d'assemblage à complémentarité de formes qui, ensemble avec un élément complémentaire (52) porté par l'enveloppe du filtre, supporte l'extrémité de la cartouche filtrante (14) éloignée de la plaque perforée (10).

8. Cartouche filtrante selon une des revendications 1-7, caractérisée en ce que la section de tête (16) est pourvue de moyens d'étanchéité (18, 20) faisant le tour le cette section sur l'une des faces d'extrémité de celle-ci.
